# EUROPÄISCHE PATENTSCHRIFT

(11) **EP 1 679 138 B1**
(45) Veröffentlichungstag und Bekanntmachung des Hinweises auf die Patenterteilung: **26.09.2007**
(21) Anmeldenummer: 05113067.2
(22) Anmeldetag: 29.12.2005
(51) Int. Cl.: B21B 35/14

(54) **Vorrichtung zum Ankuppeln eines Lagerzapfens an einen Antrieb**
Apparatus for connecting a bearing to a drive
Dispositif pour connecter un tourillon sur un entraînement

(30) Priorität: 05.01.2005 LU 91128
(43) Veröffentlichungstag der Anmeldung: 12.07.2006
(73) Patentinhaber: Maschinenfabrik Karl Hugo S.A., 4770 Born (BE)
(72) Erfinder: Heinen, Frank, 4761 Büllingen (BE); Tautges, Ralf, 54616 Winterspelt (DE)
(74) Vertreter: Schmitt, Armand

(56) Entgegenhaltungen:
- EP-A- 0 490 365
- EP-A- 1 118 785
- DE-A1- 1 902 665
- DE-A1- 19 854 330
- US-A- 4 103 528
- US-A1- 2004 048 675

## Beschreibung

### Technisches Gebiet

Die vorliegende Erfindung betrifft allgemein eine Vorrichtung zum Ankuppeln eines Lagerzapfens an einen Antrieb. Sie betrifft insbesondere eine solche Vorrichtung mit einer Gelenkwelle. Eine solche Vorrichtung ist aus DE 19854330 bekannt.

### Stand der Technik

Zum Antreiben von Walzen kommen sehr häufig Gelenkwellen (auch noch Kardanwellen genannt) zum Einsatz um das Drehmoment des Antriebs, z.B. eines Elektromotors, auf einen Lagerzapfen der Walze zu übertragen. Es ist bekannt, dass beim Walzewechsel, das An- und Abkuppeln der Gelenkwelle an den Lagerzapfen der Walze nicht unproblematisch ist. In der Tat, wenn der Lagerzapfen der Walze von der Gelenkwelle abgekuppelt wird, d.h. wenn die starre Kupplung, welche den zapfenseitigen Gelenkkopf axial fluchtend mit dem Lagerzapfen verbindet, gelöst wird, wird die Gelenkwelle inklusive angeschraubtem Kupplungsteil walzenseitig nicht mehr gehalten. Dies hat zur Folge, dass die Gelenkwelle während des Walzenwechsels umständlich festgehalten werden muss. Bei kleineren Gelenkwellen erfolgt dieses Festhalten manuell, bei schwereren Gelenkwellen ist eine Hebevorrichtung erforderlich. Es ist ebenfalls bekannt, einen Gelenkwellenständer vorzusehen, auf den die Gelenkwelle während einem Walzenwechsel walzenseitig aufgelegt wird. Hierdurch muss die Gelenkwelle während des Walzenwechsels zwar nicht mehr umständlich festgehalten werden, das Ankuppeln an die neue Walze bleibt jedoch problematisch. In der Tat, nach dem Walzenwechsel muss die Gelenkwelle mit angeschraubtem Kupplungsteil wieder vom Gelenkwellenständer abgehoben werden, um dann anschließend umständlich axial fluchtend mit dem Lagerzapfen ausgerichtet zu werden, bevor die Kupplung wieder geschlossen werden kann.

### Aufgabe der Erfindung

Eine Aufgabe der vorliegenden Erfindung ist es, eine Vorrichtung zum Ankuppeln eines Lagerzapfens an einen Antrieb mittels Gelenkwelle zu schaffen, in welcher das An- und Abkuppeln des Lagerzapfens an den Antrieb weniger umständlich ist, ohne dass hierdurch die Vorrichtung wesentlich aufwendiger wird.

Diese Aufgabe wird durch eine Vorrichtung nach Anspruch 1 gelöst.

### Allgemeine Beschreibung der Erfindung

Eine erfindungsgemäße Vorrichtung zum Ankuppeln eines Lagerzapfens an einen Antrieb, umfasst in bekannter Art und Weise einen Lagerblock in dem der Lagerzapfen drehbar gelagert ist, eine Gelenkwelle mit einem zapfenseitigen und einem antriebseitigen Gelenkkopf, eine starre Kupplung die den zapfenseitigen Gelenkkopf axial fluchtend mit dem Lagerzapfen verbindet und ein Auflager für den zapfenseitige Gelenkkopf bei gelöster Kupplung. Erfindungsgemäß ist dieses Auflager derart am Lagerblock befestigt, und die Kupplung derart ausgelegt, dass bei geöffneter Kupplung, der zapfenseitige Gelenkkopf auf dem Auflager derart abgestützt ist, dass die Kupplung in dieser Stellung schließbar ist, und durch und durch das Schließen der Kupplung, der zapfenseitige Gelenkkopf sich wiederum in Verlängerung des Lagerzapfens ausrichtet, wobei zum feststehenden Auflager ein funktionales Spiel ausgebildet wird. Mit der erfindungsgemäßen Vorrichtung entfallen umständliche Manipulationen an der Gelenkwelle beim An- und Abkuppeln des Lagerzapfens. Beim Lösen der Kupplung legt der zapfenseitige Gelenkkopf der Gelenkwelle automatisch auf das Auflager auf. Beim Schließen der Kupplung wird der zapfenseitige Gelenkkopf der Gelenkwelle wiederum automatisch in Betriebsstellung angehoben und in Verlängerung des Lagerzapfens ausgerichtet. Schlussfolgernd bleibt also festzustellen, dass eine erfindungsgemäße Vorrichtung mit geringem konstruktiven Aufwand das An- und Abkuppeln eines Lagerzapfens an eine Gelenkwelle wesentlich vereinfacht.

Das Auflager ist vorteilhaft derart am Lagerblock befestigt ist, dass beim Öffnen der Kupplung der zapfenseitige Gelenkkopf sich um 1 bis 2 mm senkt bevor er von dem Auflager abgestützt wird. Bei Ankuppeln muss der zapfenseitige Gelenkkopf also lediglich um 1 bis 2 mm angehoben zu werden. Bei geschlossener Kupplung gewährleisten diese 1 bis 2 mm jedoch ein sicheres funktionales Spiel zum feststehenden Auflager.

In einer bevorzugten Ausgestaltung ist die Kupplung eine Schalenkupplung mit einer ersten und zweiten Halbschale, welche zum Schließen der Kupplung mittels Schraubenbolzen zusammengepresst werden. Die erste Halbschale ist vorteilhaft mittels einer Ringflanschverbindung starr an dem zapfenseitigen Gelenkkopf befestigt. Die zweite Halbschale ist mittels Schraubenbolzen auf die erste Halbschale aufgeschraubt, so dass die Schalenkupplung einen axialen Fortsatz des Lagerzapfens muffenartig umgibt. Eine solche Schalenkupplung lässt sich sehr einfach anlegen wenn der zapfenseitige Gelenkkopf noch auf dem Auflager abgestützt ist. Sie ist zudem hervorragend geeignet um den zapfenseitigen Gelenkkopf der Gelenkwelle beim Schließen der Kupplung wiederum sicher in Betriebsstellung anzuheben und in Verlängerung des Lagerzapfens auszurichten. Zwecks sicherer Übertragung des Drehmomentes ist vorzugsweise noch eine Passfeder zwischen dem axialen Fortsatz und der ersten Halbschale angeordnet.

Das Auflager umfasst vorzugsweise eine Auflagerschale, die einen hinteren Wulst aufweist, auf dem die erste Halbschale der Schalenkupplung bei gelöster Kupplung aufliegt. Diese Auflagerschale weist dann weiterhin eine Mulde auf, in der die Ringflanschverbindung bei gelöster Kupplung aufliegt. Eine hintere Muldenwand bildet vorteilhaft einen axialen Endanschlag für die Ringflanschverbindung in Richtung Antrieb aus. Eine solche Ausführung der Lagerschale stabilisiert den im Auflager aufliegenden zapfenseitigen Gelenkkopf gegen Kippen und axiales Verrutschen nach dem Lösen der Kupplung.

Die Innenkontur der Auflagerschale ist vorzugsweise derart ausgebildet ist, dass bei geöffneter Kupplung, die Zentralachse der ersten Halbschale der Kupplung und die Zentralachse des Lagerzapfens in der gleichen vertikalen Ebene liegen. Hierdurch wird das Schließen der Kupplung vereinfacht.

Die Vorrichtung umfasst vorteilhaft eine Antriebssteuerung mit einem Sensor der in das Auflager eingebaut ist und derart in die Antriebssteuerung integriert ist, dass der Antrieb keinen Drehmoment auf die Gelenkwelle übertragen kann solange der zapfenseitige Gelenkkopf durch das Auflager abgestützt ist. Die Unfallgefahr wird hierdurch reduziert, da bei gelöster Kupplung kein Drehmoment auf die Gelenkwelle übertragen werden kann.

Die Auflagerschale wird vorzugsweise von einem Sockel getragen, welcher derart am Lagerblock derart befestigt ist, dass die Position der Auflagerschale am Lagerblock einstellbar ist. Hierdurch lässt sich die Lage Lagerschale relativ zum Lagerzapfen einstellen.

### Kurze Beschreibung der Figuren

Im Folgenden wird nun, zwecks Illustration, eine vorteilhafte Ausgestaltung der Erfindung anhand der beiliegenden Figuren beschrieben.
Diese zeigen:
Fig. 1 eine 3D-Ansicht einer erfindungsgemäßen Vorrichtung zum Ankuppeln eines Lagerzapfens an einen Antrieb, mit geschlossener Kupplung;
Fig. 2 einen 3D-Schnitt der Vorrichtung der Fig. 1, mit geschlossener Kupplung;
Fig. 3 eine 3D-Ansicht der Vorrichtung aus Fig. 1, mit geöffneter Kupplung beim Auswechseln einer Walze; und
Fig. 4 einen 3D-Schnitt der Vorrichtung der Fig. 1, mit geöffneter Kupplung beim Auswechseln einer Walze.

### Beschreibung einer Ausgestaltung der Erfindung

Die in den Figuren gezeigte Vorrichtung ermöglicht es den Lagerzapfen 10 einer Walze 12 an einen (nicht gezeigten) Antrieb, wie z.B. ein Elektromotor, anzukuppeln. Sie umfasst im wesentlichen einen Lagerblock 14, eine Gelenkwelle 16, eine starre Kupplung 18 und ein Auflager 20.

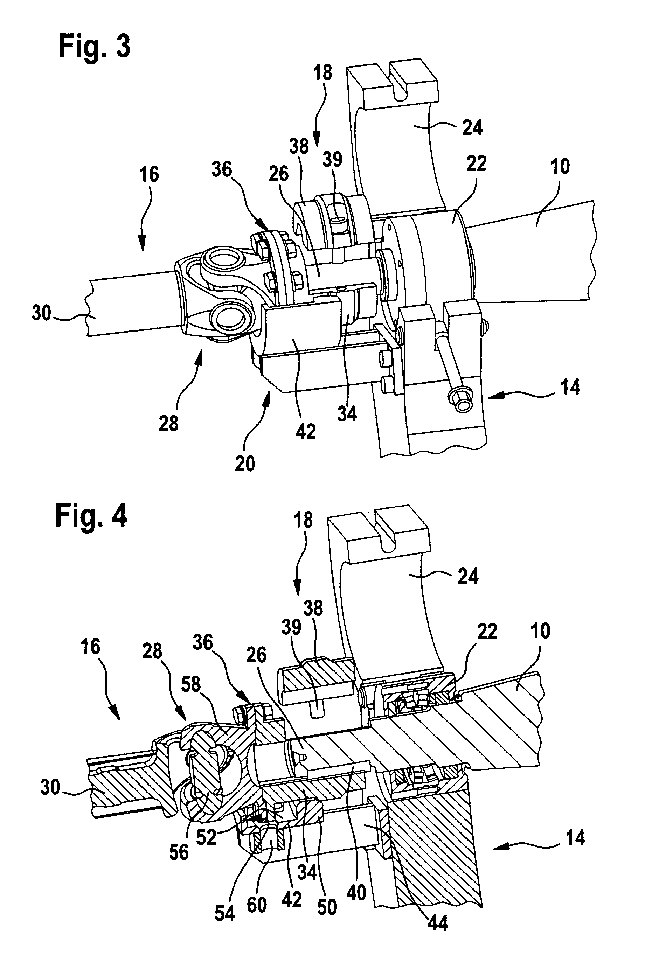

Der Lagerzapfen 10 ist mittels einer Lagereinheit 22, die auf den Lagerzapfen 10 aufgesetzt ist, drehbar im Lagerblock 14 gelagert. Wie z.B. aus Fig. 3 ersichtlich umfasst der Lagerblock 14 ein aufklappbares Oberteil 24, so dass der Lagerzapfen 10 zusammen mit seiner Lagereinheit 22 aus dem Lagerblock 14 herausgehoben werden kann. Der Lagerzapfen 10 weist einen axialen Fortsatz 26 auf, der aus der Lagereinheit 22 hervorragt.

Die Gelenkwelle 16 umfasst in bekannter Art und Weise einen zapfenseitigen Gelenkkopf 28, eine Verbindungswelle 30 und einen antriebsseitigen Gelenkkopf (nicht gezeigt). Der antriebsseitigen Gelenkkopf ist mit dem Antrieb verbunden. Beide Gelenkköpfe sind als Kardangelenke ausgebildet.

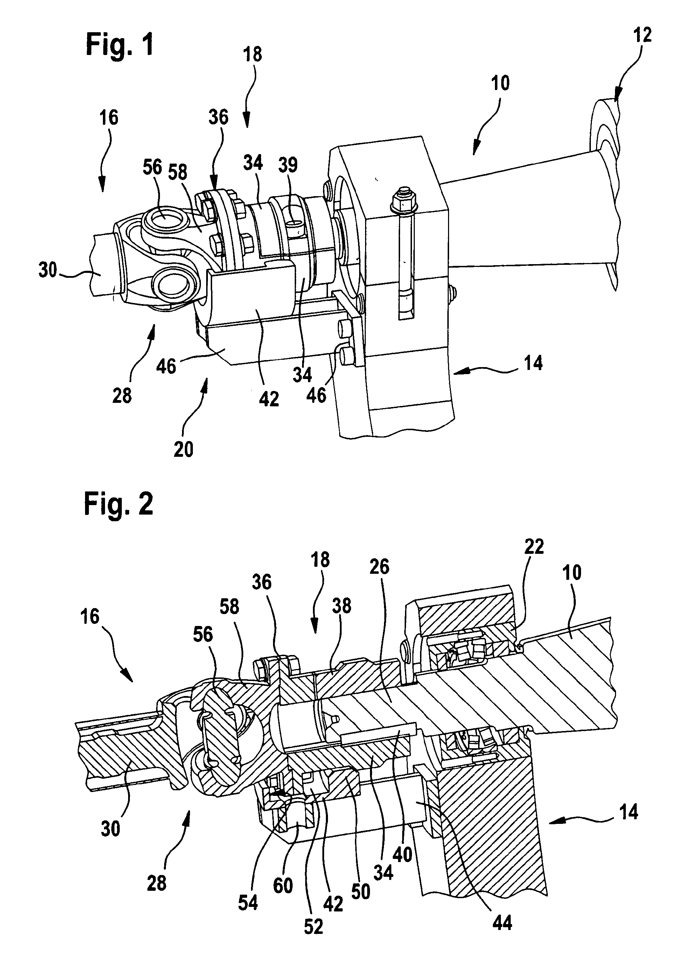

Die starre Kupplung 18 ist vorzugsweise als Schalenkupplung ausgebildet. Im Betriebszustand, der in Fig. 1 und Fig. 2 gezeigt ist, verbindet sie den zapfenseitigen Gelenkkopf 28 axial fluchtend mit dem Lagerzapfen10. Sie umfasst eine erste Halbschale 34, (auch noch als Zapfenschale 34 bezeichnet) die mittels einer Ringflanschverbindung 36 starr an dem zapfenseitigen Gelenkkopf 28 befestigt ist, und eine zweite Halbschale 38 (auch noch als Deckelschale 38 bezeichnet) die mittels Schraubenbolzen 39, 39' auf die erste Halbschale 34 aufgeschraubt ist, so dass die Schalenkupplung 18 den axialen Fortsatz 26 des Lagerzapfens 10 muffenartig umgibt und eine reibschlüssige Verbindung zwischen der Zapfenschale 34 und dem axialen Fortsatz 26 des Lagerzapfens 10 gewährleistet wird. Zwecks sicherer Übertragung des Drehmomentes ist zusätzlich eine Passfeder 40 zwischen dem axialen Fortsatz 26 und der Zapfenschale 34 angeordnet.

Das Auflager 20 umfasst eine Auflagerschale 42 die von einem Sockel 44 getragen wird. Der Sockel 44 ist am Lagersockel 14 festgeschraubt. Er weist Langlöcher 46 auf, so dass sich der vertikale Abstand zwischen der Auflagerschale 42 und dem Lagerzapfen 10 einstellen lässt. Dieser vertikale Abstand wird ein für alle Mal derart eingestellt, dass bei geöffneter Kupplung 18 (d.h. bei gelösten Schraubenbolzen 39, 39') der zapfenseitige Gelenkkopf 28 mit seiner angeflanschten ersten Halbschale 34 der Kupplung 18 auf der Auflagerschale 42 derart abgestützt ist, dass die Kupplung 18 in dieser Stellung schließbar ist (d.h. dass die Schraubenbolzen 39, 39' bei aufgesetzter Deckelschale 38 eingebracht und angezogen werden können) und durch das Festziehen der Kupplung 18 (d.h. durch das Festziehen der Schraubenbolzen 39, 39') der zapfenseitige Gelenkkopf 28 mit seiner angeflanschten ersten Halbschale 34 der Kupplung 18 derart angehoben wird, dass zur feststehenden Auflagerschale 42 ein funktionales Spiel von zirka 1 bis 2 mm ausgebildet wird. In anderen Worten, beim Lösen der Kupplung 18 (d.h. beim Lösen der Schraubenbolzen 39, 39') senkt sich der zapfenseitige Gelenkkopf 28 mit seiner angeflanschten ersten Halbschale 34 der Kupplung 18 lediglich um 1 bis 2 mm bevor er von der Auflagerschale 42 abstützt wird.

Wie am besten aus Fig. 2 oder Fig.4 ersichtlich, weist die Auflagerschale 42 einen hinteren Wulst 50 auf, auf dem die erste Halbschale 34 der Kupplung 18 bei gelöster Kupplung aufliegt. Vor dem Wulst 50 weist die Auflagerschale 42 eine Mulde 52 auf, in der die Ringflanschverbindung 36 bei gelöster Kupplung aufliegt. Eine hintere Muldenwand 54 bildet vorteilhaft einen axialen Endanschlag für die Ringflanschverbindung in Richtung Antrieb aus. Letzterer verhindert ein zu starkes Abkippen, bzw. axiales Verrutschen des zapfenseitigen Gelenkkopfs 28 nach dem Lösen der Kupplung 18. Man beachte in diesem Zusammenhang ebenfalls, das bei obenliegender Deckelschale 38, die Achse 56 des zapfenseitigen Gelenkkopf 28 welche das Flanschende 58 des zapfenseitigen Gelenkkopfs 28 trägt, im wesentlichen senkrecht steht. Es ist weiterhin hervorzuheben, dass die Innenkonturen der Auflagerschale 42 (insbesondere die Auflageflächen am Wulst 50 und in der Mulde 52) derart ausgebildet sind, dass sie eine selbstzentrierende Funktion ausüben, d.h. sie gewährleisten, dass bei geöffneter Kupplung 18, die Zentralachse der Zapfenschale 34 der Kupplung 18 und die Zentralachse des Lagerzapfens 10 bereits in der gleichen vertikalen Ebene liegen. Hierdurch entfällt ein aufwendiges Ausrichten der Zapfenschale 34 bei Wiedermontage der Kupplung.

In Fig.2 und Fig.4 ist eine Gewindebohrung 60 in der Auflagerschale 42 sichtbar. In diese Gewindebohrung wird ein Sensor (nicht gezeigt) eingeschraubt, welcher feststellt ob die Ringflanschverbindung 36 in der Mulde 52 der Auflagerschale 42 aufliegt oder nicht. In einer vorteilhaften Ausführung ist dieser Sensor z.B. ein Positionssensor der anspricht, sobald ein vorgegebenes Spiel zwischen der Auflagefläche in der Mulde und der Ringflanschverbindung 38 unterschritten wird. Dieser Sensor ist derart in die Antriebssteuerung eingebunden, dass bei Unterschreiten des vorgegebenen Spiels, der Antrieb keinen Drehmoment auf die Gelenkwelle 16 übertragen kann. Hierdurch wird z.B. sichergestellt, dass die Gelenkwelle 16 bei gelöster Kupplung 18 nicht angetrieben werden kann.

Abschließend wird nun noch ein Walzenwechsel mit der vorbeschriebenen Vorrichtung beschrieben. Zuerst wird, wie in Fig. 3 gezeigt, das Oberteil 24 des Lagerblock 14 aufgeschraubt und aufgeklappt. Anschließend werden die Schraubenbolzen 39, 39' der Kupplung 18 gelöst. Zuvor ist die Kupplung 18 ggf. noch durch Drehen in eine Stellung zu bringen in welcher die Deckeschale 38 der Kupplung 18 oben liegt. Sobald die Schraubenbolzen 39, 39' gelöst werden, senkt sich senkt sich der zapfenseitige Gelenkkopf 28 mit seiner angeflanschten Zapfenschale 34 um 1 bis 2 mm, bis er schließlich auf der Auflagerschale 42 aufliegt. Nach Herausschrauben der Schraubenbolzen 39, 39', kann die Deckeschale 38 der Kupplung 18 abgenommen werden, so dass der axiale Fortsatz 26 des Lagerzapfens 10 frei zugänglich oberhalb der Zapfenschale 34 liegt. Nach diesen Arbeitsschritten ist die Walze fertig zum Entnehmen und kann nach oben herausgehoben werden. Der zapfenseitige Gelenkkopf 28 mit seiner angeflanschten Zapfenschale 34 bleibt indes auf dem Auflager 20 in einer durch die Innenkontur der Auflagerschale 42 wohl definierten Position liegen. Solange der zapfenseitige Gelenkkopf 28 mit seiner angeflanschten Zapfenschale 34 auf dem Auflager 20 aufliegt, sperrt die Antriebssteuerung die Übertragung eines Drehmomentes auf die Gelenkwelle 16.

Eine neue Walze wird nun mit ihrem Lagerzapfen 10, der die Lagereinheit 22 trägt, in den Lagerblock 14 eingelegt. Hierbei zentriert sich die Zentralachse des Lagerzapfens 10 im wesentlichen in der gleichen vertikalen Ebene in der die Zentralachse der Zapfenschale 34 der Kupplung 18 liegt. Die Deckeschale 38 wird anschließend auf den axialen Fortsatz 26 aufgelegt, und die Schraubenbolzen 39, 39' werden eingesteckt und festgeschraubt. Beim Festziehen der Schraubenbolzen 39, 39' heben letztere die Zapfenschale 34 der Kupplung 18 und gleichzeitig auch den zapfenseitigen Gelenkkopf 28 an, so dass sich die Zapfenschale 34 der Kupplung 18 wiederum in Verlängerung Zentralachse des Lagerzapfens 10 ausrichtet und zum feststehenden Auflager ein funktionales Spiel ausgebildet wird. Er jetzt gibt die Antriebssteuerung die Übertragung eines Drehmomentes auf die Gelenkwelle 16 wiederum frei.

Bei einem Walzenwechsel ist folglich keine Manipulation an der Gelenkwelle 16 vorzunehmen. An- und Abkuppeln der Gelenkwelle 16 erfolgen ohne wesentlichen Kraftaufwand und ohne Hebewerkzeuge. Das Ankuppeln der Gelenkwelle 16 an den Lagerzapfen 10 erfordert keine umständliches Ausrichten. Die Unfallgefahr wird reduziert, da bei gelöster Kupplung kein Drehmoment auf die Gelenkwelle 16 übertragen werden kann. Es bleibt schlussendlich noch hervorzuheben, dass all diese Vorteile ohne nennenswerten konstruktiven Mehraufwand erzielt werden.

### Bezugszeichenliste

Lagerzapfen 10
Walze 12
Lagerblock 14
Gelenkwelle 16
Kupplung 18
Auflager 20
Lagereinheit 22
aufklappbares Oberteil 24
axialen Fortsatz 26
zapfenseitigen Gelenkkopf 28
Verbindungswelle 30
erste Halbschale (Zapfenschale) 34
Ringflanschverbindung 36
zweite Halbschale (Deckelschale) 38
Schraubenbolzen 39, 39'
Passfeder 40
Auflagerschale 42
Sockel 44
Langlöcher 46
Wulst 50
Mulde 52
hintere Muldenwand 54
Gelenkkopfachse 56
Flanschende 58
Gewindebohrung 60

## Patentansprüche

1. Vorrichtung zum Ankuppeln eines Lagerzapfens (10) an einen Antrieb, umfassend:
einen Lagerblock (14) in dem der Lagerzapfen (10) drehbar gelagert ist;
eine Gelenkwelle (16) mit einem zapfenseitigen Gelenkkopf (28) und einem antriebseitigen Gelenkkopf;
eine starre Kupplung (18) die den zapfenseitigen Gelenkkopf (28) axial fluchtend mit dem Lagerzapfen (10) verbindet; und
ein Auflager (20) für den zapfenseitige Gelenkkopf (28) bei gelöster Kupplung (18);
**dadurch gekennzeichnet, dass** das Auflager (20) derart am Lagerblock befestigt und die Kupplung (18) derart ausgelegt ist, dass bei geöffneter Kupplung (18), der zapfenseitige Gelenkkopf (28) auf dem Auflager (20) derart abgestützt ist, dass die Kupplung (18) in dieser Stellung schließbar ist, und durch das Schließen der Kupplung (18), der zapfenseitige Gelenkkopf (28) sich wiederum in Verlängerung des Lagerzapfens (10) ausrichtet, wobei zum feststehenden Auflager (20) ein funktionales Spiel ausgebildet wird.

2. Vorrichtung nach Anspruch 1, **dadurch gekennzeichnet, dass** das Auflager (20) derart am Lagerblock (14) befestigt ist, dass beim Öffnen der Kupplung (18) der zapfenseitige Gelenkkopf (28) sich um 1 bis 2 mm senkt bevor er vom Auflager (20) abgestützt wird.

3. Vorrichtung nach Anspruch 1 oder 2, **dadurch gekennzeichnet, dass** die Kupplung (18) eine Schalenkupplung (18) mit einer ersten Halbschale (34) und einer zweiten Halbschale (38) ist, welche zum Schließen der Kupplung (18) mittels Schrauben (39, 39') zusammengepresst werden.

4. Vorrichtung nach Anspruch 3, **dadurch gekennzeichnet, dass:** die erste Halbschale (34) mittels einer Ringflanschverbindung (36) starr an dem zapfenseitigen Gelenkkopf (28) befestigt ist; der Lagerzapfen (10) einen axialen Fortsatz (26) aufweist; die zweite Halbschale (38) mittels Schraubenbolzen (39, 39') auf die erste Halbschale (34) aufgeschraubt ist, so dass die Schalenkupplung (18) den axialen Fortsatz (26) des Lagerzapfens (10) muffenartig umgibt.

5. Vorrichtung nach Anspruch 4, **dadurch gekennzeichnet, dass** zwecks sicherer Übertragung des Drehmomentes eine Passfeder (40) zwischen dem axialen Fortsatz (26) und der ersten Halbschale (34) angeordnet ist.

6. Vorrichtung nach Anspruch 4 oder 5, **dadurch gekennzeichnet, dass** das Auflager (20) eine Auflagerschale (42) umfasst, die einen hinteren Wulst (50) aufweist, auf dem die erste Halbschale (34) der Schalenkupplung (18) bei gelöster Kupplung (18) aufliegt.

7. Vorrichtung nach Anspruch 6, **dadurch gekennzeichnet, dass** die Auflagerschale (42) eine Mulde (52) aufweist, in der die Ringflanschverbindung (36) bei gelöster Kupplung (18) aufliegt.

8. Vorrichtung nach Anspruch 7, **dadurch gekennzeichnet, dass** eine hintere Muldenwand (54) einen axialen Endanschlag für die Ringflanschverbindung (36) in Richtung Antrieb ausbildet.

9. Vorrichtung nach einem der Ansprüche 6 bis 8, **dadurch gekennzeichnet, dass** die Innenkontur der Auflagerschale derart ausgebildet ist, dass bei geöffneter Kupplung (18), die Zentralachse der ersten Halbschale der Kupplung (18) und die Zentralachse des Lagerzapfens (10) in der gleichen vertikalen Ebene liegen.

10. Vorrichtung nach einem der Ansprüche 1 bis 8, **gekennzeichnet durch** eine Antriebssteuerung umfassend einen Sensor der in das Auflager (20) eingebaut ist und derart in die Antriebssteuerung integriert ist, dass der Antrieb keinen Drehmoment auf die Gelenkwelle (16) übertragen kann solange der zapfenseitige Gelenkkopf (28) **durch** das Auflager (20) abgestützt ist.

11. Vorrichtung nach einem der Ansprüche 1 bis 10, **dadurch gekennzeichnet, dass** die Auflagerschale (42) von einem Sockel (44) getragen wird, welcher derart am Lagerblock (14) derart befestigt ist, dass die Position der Auflagerschale (42) am Lagerblock (14) einstellbar ist.

12. Vorrichtung nach einem der Ansprüche 1 bis 11, **dadurch gekennzeichnet, dass** der Lagerzapfen ein Lagerzapfen (10) einer Walze ist.

## Claims

1. Apparatus for coupling a bearing journal (10) to a drive, comprising:
a bearing block (14), in which the bearing journal (10) is mounted such that it can rotate;
a jointed shaft (16) having a joint head (28) on the journal side and a joint head on the drive side;
a rigid coupling (18), which connects the joint head (28) on the journal side to the bearing journal (10) so as to be aligned axially; and
a support (20) for the joint head (28) on the journal side when the coupling (18) is released;
**characterized in that** the support (20) is fixed to the bearing block and the coupling (18) is designed in such a way that, when the coupling (18) is disengaged, the joint head (28) on the journal side is supported on the support (20) in such a way that the coupling (18) can be engaged in this position and, as a result of the engagement of the coupling (18), the joint head (28) on the journal side is again aligned in extension of the bearing journal (10), a functional clearance being formed with respect to the stationary support (20).

2. Apparatus according to Claim 1, **characterized in that** the support (20) is fixed to the bearing block (14) in such a way that, as the coupling (18) is disengaged, the joint head (28) on the journal side is lowered by 1 to 2 mm before it is supported by the support (20).

3. Apparatus according to Claim 1 or 2, **characterized in that** the coupling (18) is a shell coupling (18) having a first half shell (34) and a second half shell (38), which are pressed together by means of screws (39, 39') in order to engage the coupling (18).

4. Apparatus according to Claim 3, **characterized in that**:
the first half shell (34) is fixed rigidly to the joint head (28) on the journal
side by means of an annular flange connection (36);
the bearing journal (10) has an axial extension (26);
the second half shell (38) is screwed onto the first half shell (34) by means of threaded bolts (39, 39'), so that the shell coupling (18) surrounds the axial extension (26) of the bearing journal (10) in the manner of a sleeve.

5. Apparatus according to Claim 4, **characterized in that**, for the purpose of reliable transmission of the torque, a feather key (40) is arranged between the axial extension (26) and the first half shell (34).

6. Apparatus according to Claim 4 or 5, **characterized in that** the support (20) comprises a support shell (42), which has a rear bead (50), on which the first half shell (34) of the shell coupling (18) rests when the coupling (18) is disengaged.

7. Apparatus according to Claim 6, **characterized in that** the support shell (42) has a hollow (52), in which the annular flange connection (36) rests when the coupling (18) is disengaged.

8. Apparatus according to Claim 7, **characterized in that** a rear wall (54) of the hollow forms an axial end stop for the annular flange connection (36) in the direction of the drive.

9. Apparatus according to one of Claims 6 to 8, **characterized in that** the internal contour of the support shell is formed in such a way that, when the coupling (18) is disengaged, the central axis of the first half shell of the coupling (18) and the central axis of the bearing journal (10) lie on the same vertical plane.

10. Apparatus according to one of Claims 1 to 8, **characterized by** a drive control system comprising a sensor which is incorporated in the support (20) and is integrated into the drive control system in such a way that the drive cannot transmit any torque to the jointed shaft (16) as long as the joint head (28) on the journal side is supported by the support (20).

11. Apparatus according to one of Claims 1 to 10, **characterized in that** the support shell (42) is carried by a pedestal (44), which is fixed to the bearing block (14) in such a way that the position of the support shell (42) on the bearing block (14) can be adjusted.

12. Apparatus according to one of Claims 1 to 11, **characterized in that** the bearing journal is a bearing journal (10) of a roll.

## Revendications

1. Dispositif de couplage d'un tourillon (10) à un entraînement, comprenant :
un bloc de palier (14) dans lequel le tourillon (10) est logé de manière tournante ;
un arbre articulé (16) doté d'une tête d'articulation (28) côté tourillon et d'une tête d'articulation côté entraînement ;
un accouplement rigide (18) qui raccorde la tête d'articulation (28) côté tourillon au tourillon (10) axialement au même niveau ; et
un appui (20) pour la tête d'articulation (28) côté tourillon, lorsque l'accouplement est détaché ;
**caractérisé en ce que** l'appui (20) est fixé de telle manière sur le bloc de palier et **en ce que** l'accouplement (18) est conçu de telle manière que, lorsque l'accouplement (18) est ouvert, la tête d'articulation (28) côté tourillon s'appuie sur l'appui (20) de telle manière que l'accouplement (18) peut être fermé dans cette position, et qu'en raison de la fermeture de l'accouplement (18), la tête d'articulation (28) côté tourillon s'ajuste de nouveau en prolongement du tourillon (10), un jeu fonctionnel étant alors réalisé vers l'appui (20) fixe.

2. Dispositif selon la revendication 1, **caractérisé en ce que** l'appui (20) est fixé sur le bloc de palier (14) de telle manière que, lorsque l'accouplement (18) est ouvert, la tête d'articulation (28) côté tourillon s'abaisse de 1 à 2 mm avant d'être soutenue par l'appui (20).

3. Dispositif selon la revendication 1 ou 2, **caractérisé en ce que** l'accouplement (18) est un accouplement à coquilles (18) comprenant une première demi-coquille (34) et une deuxième demi-coquille (38), lesquelles sont pressées ensemble au moyen de vis (39, 39') pour fermer l'accouplement (18).

4. Dispositif selon la revendication 3, **caractérisé en ce que** :
la première demi-coquille (34) est fixée de manière rigide sur la tête d'articulation (28) côté tourillon au moyen d'un raccord à bride annulaire (36) ;
le tourillon (10) présente un prolongement axial (26) ;
la deuxième demi-coquille (38) est vissée sur la première demi-coquille (34) au moyen de boulons filetés (39, 39'), de sorte que l'accouplement à coquilles (18) entoure le prolongement axial (26) du tourillon (10) de manière similaire à un manchon.

5. Dispositif selon la revendication 4, **caractérisé en ce que**, dans le but d'une transmission fiable du couple de rotation, une clavette (40) est disposée entre le prolongement axial (26) et la première demi-coquille (34).

6. Dispositif selon la revendication 4 ou 5, **caractérisé en ce que** l'appui (20) comprend une coquille de support (42) qui présente un bourrelet arrière (50) sur lequel repose la première demi-coquille (34) de l'accouplement à coquilles (18) lorsque l'accouplement (18) est détaché.

7. Dispositif selon la revendication 6, **caractérisé en ce que** la coquille de support (42) présente une cavité (52) dans laquelle repose la bride annulaire (36) lorsque l'accouplement (18) est détaché.

8. Dispositif selon la revendication 7, **caractérisé en ce qu'**une paroi de bourrelet (54) arrière forme une butée terminale axiale pour le raccord à bride annulaire (36) en direction de l'entraînement.

9. Dispositif selon l'une quelconque des revendications 6 à 8, **caractérisé en ce que** le contour intérieur de la coquille de support est exécuté de telle manière que, lorsque l'accouplement est ouvert (18), l'axe central de la première demi-coquille (18) et l'axe central du tourillon (10) sont situés dans le même plan vertical.

10. Dispositif selon l'une quelconque des revendications 1 à 8, **caractérisé par** une commande d'entraînement comprenant un capteur, qui est installé dans l'appui (20) et est intégré de telle manière dans la commande d'entraînement que l'entraînement ne peut pas transmettre de couple de rotation sur l'arbre articulé (16) tant que la tête d'articulation (28) côté tourillon est soutenue par l'appui (20).

11. Dispositif selon l'une quelconque des revendications 1 à 10, **caractérisé en ce que** la coquille de support (42) est portée par un socle (44) qui est fixé de telle manière sur le bloc de palier (14) que la position de la coquille de support (42) sur le bloc de palier (14) est réglable.

12. Dispositif selon l'une quelconque des revendications 1 à 11, **caractérisé en ce que** le tourillon est un tourillon (10) d'un rouleau.
